# FASCICULE DE BREVET EUROPEEN

(11) **EP 1 777 430 B1**
(45) Date de publication et mention de la délivrance du brevet: **19.08.2009**
(21) Numéro de dépôt: 06121701.4
(22) Date de dépôt: 04.10.2006
(51) Int. Cl.: F16D 48/02

(54) **Dispositif hydraulique de commande d'embrayage**
Hydraulische Kupplungssteuervorrichtung
Hydraulic clutch control device

(30) Priorité: 19.10.2005 FR 0553168
(43) Date de publication de la demande: 25.04.2007
(73) Titulaire: Valeo Embrayages, 80009 Amiens (FR)
(72) Inventeur: Guerlet, Bernard, 12100 Cuneo (IT); Lebas, Gilles, 80800 Villers Bretonneux (FR); Maurel, Hervé, 80000 Amiens (FR); Mollier, Christophe, 95220 Herblay (FR); Delevallée, Jean-Louis, 80000 Amiens (FR)
(74) Mandataire: Lemaire, Marc

(56) Documents cités:
- EP-A- 1 329 369
- FR-A- 2 862 114
- US-A- 4 464 900

## Description

La présente invention concerne un dispositif hydraulique de commande, un ensemble d'assistance pour système de commande hydraulique d'embrayage et un système de commande hydraulique d'embrayage.

Un dispositif d'embrayage de véhicule automobile est généralement actionné à l'aide d'une pédale de commande d'embrayage accessible depuis un habitacle du véhicule. Il est connu de relier cette pédale de commande au dispositif d'embrayage par un système de commande hydraulique.

Afin de minimiser l'effort qu'un utilisateur doit appliquer sur la pédale de commande pour actionner l'embrayage, le système de commande hydraulique comporte généralement un ensemble d'assistance encore appelé "cylindre d'assistance".

On connaît déjà dans l'état de la technique, notamment d'après FR-A-2 862 114, un ensemble d'assistance comprenant, d'une part, un dispositif hydraulique de commande du type comportant un piston de commande :
- monté mobile dans un corps,
- séparant dans ce corps des chambres hydrauliques proximale et distale de volumes variables,
- comportant des moyens de communication entre les chambres hydrauliques obturables par un organe formant clapet monté mobile dans le piston entre des positions d'obturation et de dégagement des moyens de communication,
et, d'autre part, un dispositif pour l'assistance au déplacement de ce piston.

Dans ce qui suit, on qualifiera de proximal un élément du dispositif proche, dans la chaîne de commande, de la pédale de commande, et de distal un élément du dispositif distant, dans la chaîne de commande, de cette pédale de commande.

Le piston de commande est déplaçable dans le corps entre des positions de repos et de fin de course, sous l'effet d'admission ou de refoulement de liquide de transmission dans les chambres hydrauliques du corps.

Les moyens de communication entre les chambres hydrauliques sont destinés à limiter des dérives de la position de repos du piston, correspondant à des excès ou déficits de liquide dans les chambres hydrauliques. Ces dérives sont généralement dues à une dilatation ou une contraction du liquide de transmission, sous l'effet de la variation de la température de ce liquide, ou encore à une usure ou une déformation thermique d'un élément du dispositif d'embrayage.

Les moyens de communication permettent également de purger le dispositif hydraulique de commande, notamment en permettant le passage d'une bulle d'air indésirable de la chambre distale vers la chambre proximale.

L'organe formant clapet est destiné à obturer ces moyens de communication afin notamment de permettre le déplacement du piston lorsque la pédale de commande est actionnée. Cet organe formant clapet est donc en position de dégagement lorsque le piston est en position de repos et en position d'obturation dans les autres cas.

Dans FR-A-2 862 114, la position de l'organe formant clapet est commandée en fonction de la position du piston dans le corps. L'organe formant clapet est prolongé par une tige destinée à venir en butée contre une paroi du corps lorsque le piston est en position de repos, afin que l'organe formant clapet soit en position de dégagement.

Le piston est par ailleurs muni de moyens élastiques destinés à appliquer à l'organe formant clapet une force élastique de rappel en position d'obturation lorsque la tige n'est plus en butée contre la paroi du corps, c'est à dire lorsque le piston n'est plus en position de repos.

Lorsque la pédale de commande est actionnée, du liquide de transmission est admis dans la chambre hydraulique proximale afin de pousser le piston.

Ce piston étant dans sa position de repos, l'organe formant clapet est en position de dégagement des moyens de communication. Ainsi, le liquide de transmission peut passer de la chambre proximale à la chambre distale par ces moyens de communication, ce qui limite la poussée exercée par le liquide sur le piston.

Il est alors difficile de prévoir à quel moment le piston commence à se déplacer.

L'invention a notamment pour but d'éviter cet inconvénient en fournissant un dispositif hydraulique dont le clapet est apte à passer en position d'obturation quelle que soit la position du piston.

A cet effet, l'invention a pour objet un dispositif hydraulique de commande du type précité, où le piston porte des moyens élastiques de rappel de l'organe formant clapet en position de dégagement, l'organe formant clapet comportant des moyens d'application de force de pression sollicitant cet organe formant clapet à l'encontre de sa force de rappel par effet de pression fluidique sur les moyens d'application de force de pression.

Lorsque le piston est au repos, les pressions du liquide de transmission dans les chambres hydrauliques proximale et distale sont sensiblement égales à la pression atmosphérique. Dans ce cas, la force de rappel de l'organe formant clapet, complétée par d'éventuels frottements, est prédominante par rapport à la résultante des forces de pression fluidique appliquées à l'organe formant clapet, si bien que ce dernier est maintenu dans sa position de dégagement des moyens de communication.

Les moyens de communication permettent alors la circulation du liquide de transmission entre les chambres hydrauliques, de sorte qu'il ne peut se créer d'excès ou de déficit de liquide dans l'une ou l'autre des chambres hydrauliques, lorsque le piston est en position de repos. On évite ainsi les dérives de la position de repos du piston.

Lorsque la pédale de commande est actionnée, les pressions du liquide de transmission augmentent dans les chambres hydrauliques proximale et distale jusqu'à ce que la résultante des forces de pression fluidique appliquées à l'organe formant clapet devienne prédominante par rapport à la force élastique de rappel de cet organe formant clapet et à d'éventuels frottements, si bien que ce dernier est déplacé vers sa position d'obturation des moyens de communication.

Enfin, lorsque la pédale de commande est relâchée, les pressions dans les chambres hydrauliques proximale et distale redeviennent sensiblement égales à la pression atmosphérique et le piston est rappelé vers sa position de repos. La force de rappel de l'organe formant clapet redevient alors prédominante, si bien que ce dernier revient en position de dégagement, cela quelle que soit la position du piston dans le corps.

Ainsi, l'organe formant clapet peut passer en position de dégagement même lorsque le piston n'est pas dans sa position de repos.

Selon un mode de réalisation avantageux de l'invention, les moyens d'application de force de pression comportent au moins une surface de pression hydraulique et une surface de pression pneumatique.

De préférence, les moyens d'application de force de pression comportent des première et seconde surfaces de pression hydraulique d'aires efficaces différentes sollicitant l'organe formant clapet à l'encontre de sa force de rappel par effet de force de pression différentielle, et une surface de pression pneumatique d'aire efficace correspondant à la différence des aires efficaces des surfaces de pression hydraulique.

On notera qu'on appelle aire efficace d'une surface d'un élément l'aire dont le produit avec la pression exercée sur cette surface par un fluide donne la force appliquée sur l'élément par le fluide.

Le déplacement de l'organe formant clapet d'obturation des moyens de communication est commandé par effet de force de pression différentielle, c'est à dire par la résultante des forces de pression exercées sur l'organe formant clapet.

La surface de pression pneumatique, en contact avec un gaz, en général de l'air, subit une force de pression pneumatique négligeable par rapport aux forces de pression hydraulique appliquées sur les surfaces de pression hydrauliques.

Ainsi, l'organe formant clapet peut se déplacer lorsque les forces de pression hydraulique appliquées sur les surfaces de pression hydrauliques varient.

Un dispositif hydraulique de commande selon l'invention peut en outre comporter l'une ou plusieurs des caractéristiques suivantes :
- la surface de pression pneumatique délimite avec le piston de commande une chambre pneumatique fermée de volume variable contenant de préférence de l'air;
- l'organe formant clapet est déplaçable en translation dans un logement de guidage ménagé dans le piston ;
- les surfaces de pression hydrauliques et pneumatique sont sensiblement planes et sensiblement perpendiculaires à la direction de déplacement de l'organe formant clapet;
- la chambre pneumatique s'étend entre deux joints d'étanchéité, agencés entre l'organe formant clapet et le piston de commande, isolant cette chambre pneumatique des chambres hydrauliques ;
- la chambre pneumatique s'étend entre un organe d'étanchéité, isolant cette chambre pneumatique des chambres hydrauliques, et une paroi ménagée dans le piston ;
- les moyens élastiques comportent un ressort de compression en appui entre un premier siège ménagé sur le piston et un second siège ménagé sur l'organe formant clapet;
- les moyens élastiques de rappel comportent une membrane élastique, comprenant une zone périphérique liée au piston et une zone centrale liée à l'organe formant clapet ;
- les moyens élastiques de rappel comportent deux membranes élastiques étanches, la chambre pneumatique s'étendant entre ces deux membranes ;
- l'organe formant clapet est agencé dans le piston de commande de manière à se déplacer transversalement dans ce piston ;
- les moyens de communication comportent un orifice de communication, ménagé dans le piston, obturable par serrage de surfaces d'obturations complémentaires portées par le piston et un joint d'étanchéité porté par l'organe formant clapet;
- l'organe formant clapet s'étend dans une chambre hydraulique intermédiaire délimitée par deux joints d'étanchéité agencés entre le piston de commande et le corps ;
- le dispositif hydraulique de commande comporte des moyens de passage de liquide, ménagés dans le piston ou dans le corps, destinés à faire communiquer la chambre intermédiaire hydraulique avec la chambre proximale ;
- les moyens de passage sont ménagés dans le corps de sorte que, lorsque le piston a parcouru une course prédéterminée, la chambre intermédiaire hydraulique et la chambre proximale sont isolées l'une de l'autre ;
- l'organe formant clapet est muni d'une butée, ménagé sur la première surface de pression hydraulique, destiné à coopérer avec une butée complémentaire ménagée sur le corps lorsque l'organe formant clapet est en position de dégagement ;
- l'organe formant clapet est agencé dans le piston de manière à se déplacer axialement dans ce piston ;
- les moyens de communication comportent un orifice de communication ménagé dans l'organe formant clapet, obturable par serrage de surfaces d'obturations complémentaires portées par le piston et un joint d'étanchéité porté par l'organe formant clapet ;
- l'organe formant clapet est apte à se déplacer en position d'obturation lorsque la pression dans les chambres hydrauliques est supérieure à un seuil prédéterminé inférieur à 10 bars, de préférence inférieur à 5 bars, la pression supérieure à ce seuil permettant notamment de vaincre la force de rappel des moyens élastiques.

L'invention a également pour objet un module à clapet selon la revendication 24.

L'invention à également pour objet un ensemble d'assistance pour système de commande hydraulique d'embrayage, qui comporte un dispositif hydraulique de commande tel que défini précédemment et un dispositif pour l'assistance au déplacement du piston.

L'invention a enfin pour objet un système de commande hydraulique d'embrayage, qui comporte un dispositif hydraulique de commande tel que défini précédemment.

L'invention sera mieux comprise à la lecture de la description qui va suivre, donnée uniquement à titre d'exemple et faite en se référant aux dessins annexés dans lesquels :
- les figures 1 et 2 sont des vues en coupe axiale d'un ensemble d'assistance comportant un dispositif hydraulique de commande selon un premier mode de réalisation de l'invention, l'organe formant clapet étant respectivement en position de dégagement et d'obturation des moyens de communication ;
- les figures 3 et 4 sont des vues similaires aux figures 1 et 2 montrant un dispositif hydraulique de commande selon un deuxième mode de réalisation de l'invention ;
- les figures 5 et 6 sont des vues en coupe axiale d'un dispositif hydraulique de commande selon un troisième mode de réalisation de l'invention ;
- la figure 7 est une vue en perspective d'un dispositif hydraulique de commande selon un quatrième mode de réalisation de l'invention ;
- la figure 8 est une vue en perspective d'un dispositif hydraulique de commande selon un cinquième mode de réalisation de l'invention.

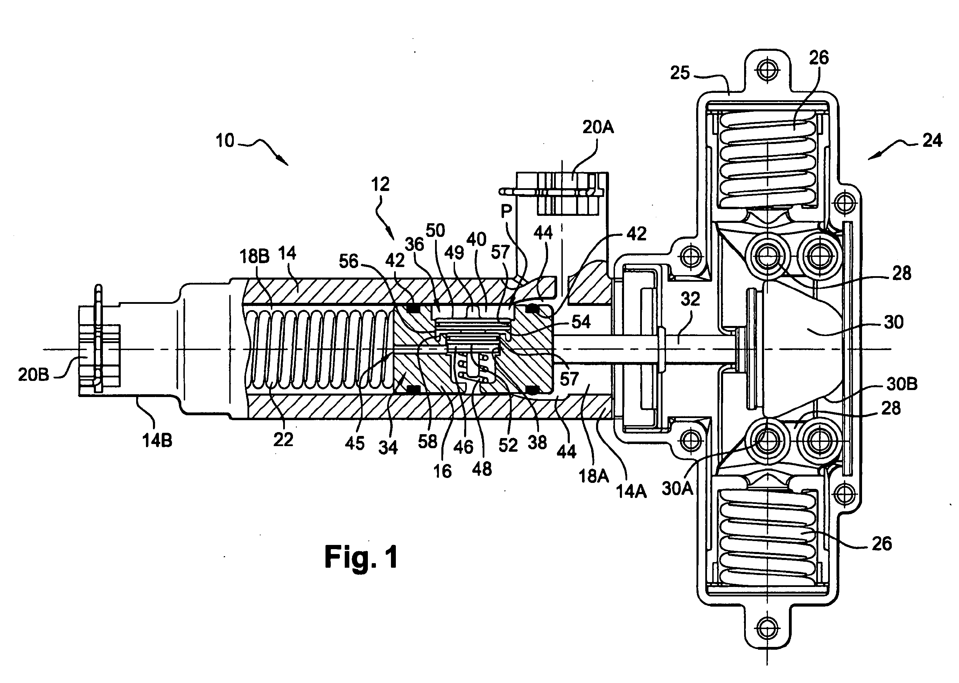

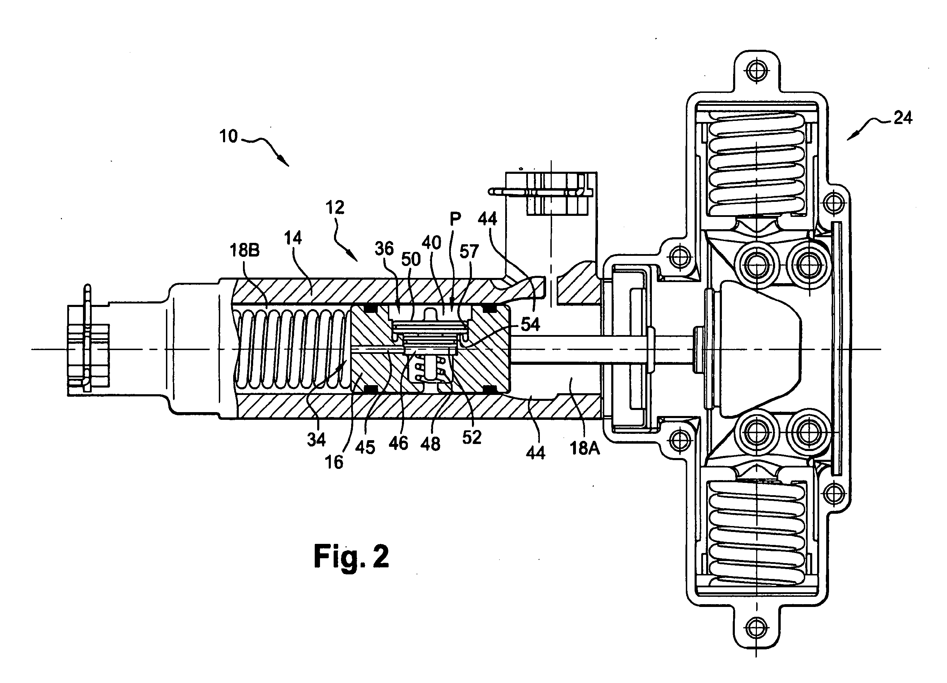

On a représenté sur les figures 1 et 2 un ensemble d'assistance pour système de commande hydraulique d'embrayage, appelé par la suite cylindre d'assistance 10, destiné à être agencé dans un système de commande hydraulique d'un embrayage de véhicule automobile, entre une pédale de commande, actionnée par un conducteur du véhicule automobile, et un dispositif d'embrayage classique (non représenté).

Le cylindre d'assistance 10 comporte un dispositif hydraulique de commande 12 selon un premier mode de réalisation de l'invention.

Le dispositif hydraulique de commande 12 est muni d'un corps 14, de forme générale tubulaire, comportant deux extrémités proximale 14A et distale 14B. Un piston de commande 16 est monté coulissant axialement dans le corps 14 entre une position de repos, représentée sur la figure 1, et une position active de fin de course, représentée sur la figure 2.

Ce piston 16 sépare dans le corps 14 des chambres hydrauliques proximale 18A et distale 18B de volumes variables reliées respectivement, via des premier et second circuits hydrauliques, à la pédale de commande d'embrayage et au dispositif d'embrayage. Les chambres proximale 18A et distale 18B sont munies respectivement de premier 20A et second 20B orifices pour l'entrée et la sortie d'un liquide de transmission, par exemple une huile classique.

Lorsque la pédale de commande d'embrayage est actionnée, du liquide de transmission entre dans la chambre proximale 18A par l'orifice 20A, augmentant alors la pression dans la chambre proximale 18A, et poussant ainsi axialement le piston 16 vers l'extrémité distale 14B du corps 14. Le liquide de transmission de la chambre hydraulique distale 18B est alors refoulé vers le dispositif d'embrayage et lui transmet un effort de poussée qui le fait passer en position débrayée.

Lorsque la pédale de commande d'embrayage est relâchée, le dispositif d'embrayage est rappelé en position embrayée.

Ce dispositif d'embrayage exerce alors un effort hydraulique de rappel sur le piston 16, qui est ainsi rappelé vers la position de repos.

Le dispositif hydraulique de commande 12 comporte également un organe élastique de rappel 22, généralement un ressort de compression, permettant d'achever la course de rappel du piston 16.

Afin de minimiser l'effort devant être appliqué par l'utilisateur à la pédale de commande pour actionner le dispositif d'embrayage, le cylindre d'assistance 10 comporte un dispositif 24 d'assistance au déplacement axial du piston 16 de type classique.

Ce dispositif d'assistance 24 comporte des organes élastiques 26, prenant appui sur un carter 25 solidaire du corps 14, sollicitant des organes 28 d'application d'effort contre un organe 30 de renvoi d'effort rendu solidaire du piston 16 par une tige 32.

Ainsi, chaque organe 28 d'application d'effort coopère avec l'organe 30 de renvoi d'effort par effet de came de façon à transformer le déplacement de cet organe 28 sous l'effet de sa sollicitation élastique en déplacement du piston 16 vers l'extrémité distale 14B du corps 14.

De manière classique, l'organe 30 de renvoi d'effort comporte une première surface de came 30A perpendiculaire à la direction de l'effort appliqué par l'organe d'application d'effort 28, et une seconde surface de came 30B inclinée de manière à renvoyer l'effort transversalement.

L'organe d'application d'effort 28 est en appui sur la première surface de came 30A lorsque le piston 16 est dans sa position de repos, afin que la came ne renvoie pas d'effort susceptible de déplacer le piston. Par ailleurs, l'organe d'application d'effort 28 est en appui sur la seconde surface de came 30B lorsque le piston 16 se déplace, afin que la came 30 renvoie un effort d'assistance au déplacement de ce piston 16.

Afin de permettre la circulation du liquide de transmission entre les chambres hydrauliques proximale et distale, le piston 16 comporte des moyens 34 de communication obturables par un organe 36 formant clapet.

Le clapet 36, de forme générale de révolution, est monté mobile en translation dans un logement 38 de forme complémentaire, ménagé dans le piston 16, entre des positions de dégagement et d'obturation des moyens de communication 34, représentées respectivement sur les figures 1 et 2.

Conformément au premier mode de réalisation de l'invention, le clapet 36 est agencé dans le piston de commande 16 de manière à se déplacer transversalement dans ce piston 16. On notera que le logement 38 participe au guidage des déplacements transversaux du clapet 36.

Le clapet 36 s'étend dans une chambre hydraulique intermédiaire 40, de forme générale annulaire, entourant le piston 16. Cette chambre hydraulique intermédiaire 40 est délimitée par deux joints d'étanchéité 42 agencés entre le piston 16 et le corps 14.

On notera que le corps 14 comporte des moyens 44 de passage de liquide, destinés à faire communiquer la chambre hydraulique intermédiaire 40 et la chambre hydraulique proximale 18A lorsque le piston est dans sa position de repos.

De préférence, ces moyens de passage 44 sont conformés de façon que la chambre hydraulique intermédiaire 40 et la chambre hydraulique proximale 18A sont isolées l'une de l'autre lorsque le piston 16 a parcouru une course prédéterminée.

Conformément au premier mode de réalisation de l'invention, les moyens 34 de communication comportent un orifice 45 de communication entre la chambre hydraulique distale 18B et la chambre hydraulique intermédiaire 40. Cet orifice de communication 45 est obturable par serrage d'une première surface d'obturation annulaire portée par le piston 16 et d'une seconde surface d'obturation complémentaire portée par un joint élastique d'étanchéité annulaire 46, porté par le clapet 36.

Conformément à l'invention, l'orifice de communication 45 est obturé lorsque la pression dans la chambre hydraulique intermédiaire 40 est supérieure à un premier seuil prédéterminé, et est dégagé lorsque cette pression est inférieure à un second seuil prédéterminé. Généralement, les premier et second seuils prédéterminés sont sensiblement égaux et inférieurs à 10 bars. De préférence, les premier et second seuils prédéterminés sont inférieurs à 5 bars.

Le clapet 36 est muni de moyens de déplacement en fonction de la pression.

Ces moyens de déplacement comportent des moyens élastiques comprenant un ressort de compression 48 prenant appui sur un premier siège ménagé sur le piston 16 et sur un second siège ménagé sur le clapet 36. Ce ressort 48 est destiné à rappeler élastiquement le clapet 36 en position de dégagement des moyens de communication 34. La raideur de ce ressort 48 est choisie de manière à calibrer les premier et second seuils de pression prédéterminés, en prenant en compte notamment différentes forces de frottement.

On notera que le clapet 36 est muni d'une butée 49 destinée à coopérer avec une butée complémentaire ménagée sur le corps 14 lorsque le clapet 36 est en position de dégagement. Cette butée 49 est destinée à matérialiser une limite de dégagement du clapet 36.

Les moyens de déplacement comportent en outre des moyens P d'application de force de pression, comprenant des première 50 et seconde 52 surfaces de pression hydraulique, ménagées sur le clapet 36. Ces première 50 et seconde 52 surfaces de pression hydraulique sont généralement sensiblement planes et perpendiculaires à la direction de déplacement du clapet 36.

La première surface hydraulique 50 a une aire efficace supérieure à la seconde surface hydraulique 52, si bien que la force de pression appliquée sur la première surface hydraulique 50 est supérieure à la force de pression appliquée sur la seconde surface hydraulique 52. En outre, la première surface hydraulique 50 est ménagée en avant de la seconde surface hydraulique 52 en considérant le sens de déplacement du clapet 36 vers sa position de dégagement.

Ainsi, les première 50 et seconde 52 surfaces de pression hydraulique sollicitent le clapet 36 à l'encontre de sa force de rappel élastique par effet de pression fluidique sur les moyens P d'application de force de pression.

On notera qu'afin d'obtenir des surfaces de pression hydraulique 50, 52 d'aires efficaces différentes, le clapet 36 comporte une surface de pression pneumatique 54, non sollicitée par la pression du liquide de transmission, d'aire efficace correspondant à la différence entre les aires efficaces des première 50 et seconde 52 surfaces de pression hydraulique.

Cette surface de pression pneumatique 54 délimite, avec le piston de commande 14, une chambre pneumatique fermée 56, de volume variable, remplie de gaz, de préférence de l'air. Cette chambre pneumatique 56 s'étend entre deux joints d'étanchéité 57 agencés entre le clapet 36 et le piston de commande 16.

La pression de l'air dans la chambre pneumatique 56 est sensiblement égale à la pression atmosphérique, si bien que la force de pression appliquée sur la surface de pression pneumatique 54 est négligeable devant les forces de pression appliquées aux surfaces de pression hydraulique 50, 52.

De préférence, la chambre pneumatique 56 est la plus grande possible afin de minimiser les variations de pression de l'air dans cette chambre 56 lorsque son volume varie. Ainsi, le volume de la chambre pneumatique 56 est avantageusement augmenté par un dégagement 58.

On précisera ci-dessous les principaux aspects du fonctionnement du dispositif hydraulique de commande 12 selon le premier mode de réalisation de l'invention, liés à l'invention.

Lorsque le piston 16 est au repos, les moyens de passage 44 et les moyens de communication 34 sont dégagés (figure 1). Ainsi, les chambres hydrauliques proximale 18A, intermédiaire 40 et distale 18B communiquent ensemble, et la pression est sensiblement la même dans les trois chambres hydrauliques, généralement sensiblement égale à la pression atmosphérique.

Dans ce cas, la force de rappel du clapet 36, complétée par d'éventuels frottements (en particulier des joints 57), est prédominante par rapport à la résultante des forces de pression appliquées au clapet 36, si bien que ce dernier est maintenu dans sa position de dégagement des moyens de communication 34.

On notera que, lorsque le piston 16 est en position de repos, le dispositif d'assistance 24 est également au repos, c'est-à-dire que l'organe d'application d'effort 28 est en appui contre la première surface de came 30A.

Lorsque la pédale de commande est actionnée, le liquide de transmission est injecté dans la chambre hydraulique proximale 18A, faisant augmenter la pression dans les chambres hydrauliques proximale 18A, intermédiaire 40 et distale 18B.

Lorsque la pression devient supérieure au premier seuil prédéterminé, la force de pression appliquée à la première surface hydraulique 50 devient prédominante par rapport aux forces opposées appliquées au clapet 36, c'est à dire les forces de pression appliquées à la seconde surface hydraulique 52 et à la surface pneumatique 54, la force de rappel du ressort 48 et les frottements éventuels. Le clapet 36 passe alors dans la position d'obturation de l'orifice de communication 45, telle que représentée sur la figure 2, dans laquelle les surfaces d'obturation du joint d'étanchéité 46 et du piston 16 coopèrent entre elles.

Une fois l'orifice de communication 45 obturé, les chambres hydrauliques distale 18B et intermédiaire 40 sont isolées l'une de l'autre. Le liquide de transmission injecté dans la chambre hydraulique proximale 18A provoque une augmentation de la pression dans les chambres hydrauliques proximale 18A et intermédiaire 40. Le piston est alors poussé vers l'extrémité distale 14B du corps 14.

Lorsque le piston 16 dépasse une course prédéterminée (voir figure 2), les moyens de passage 44 ne communiquent plus avec la chambre hydraulique intermédiaire 40 (voir figure 2). La chambre hydraulique intermédiaire 40 est alors isolée de la chambre hydraulique proximale 18A et le piston 16 agit comme un piston classique (sans clapet 36), l'éventuelle ouverture accidentelle du clapet 36 ne modifiant pas l'isolation des chambres hydrauliques proximale 18A et distale 18B.

De plus, dans le cas où la pédale de commande est brusquement relâchée, la pression dans la chambre proximale 18A chute brusquement jusqu'à atteindre une valeur proche de celle de la pression atmosphérique, inférieure au seuil prédéterminé de pression en dessous duquel le clapet 36 est susceptible de passer en position de dégagement.

Puisque le piston 16 agit comme un piston classique lorsque les moyens de passage 44 ne communiquent plus avec la chambre hydraulique intermédiaire 40, une telle chute brutale de pression ne risquerait donc pas de dégager les moyens de communication 34.

Lorsque la pédale de commande est relâchée, le piston 16 est rappelé vers sa position de repos et les pressions du liquide de transmission dans les chambres hydrauliques proximale 18A, distale 18B et intermédiaire 40 diminuent pour se rapprocher de, voire atteindre, la pression atmosphérique.

Lorsque le piston 16 est suffisamment proche de sa position de repos, les moyens de passage 44 font communiquer à nouveau la chambre hydraulique intermédiaire 40 avec la chambre hydraulique proximale 18A.

La pression dans la chambre hydraulique intermédiaire 40 devient alors inférieure au second seuil prédéterminé. La force de rappel élastique du ressort 48 redevient alors prédominante, si bien que le clapet 36 revient en position de dégagement de l'orifice de communication 45. Les chambres hydrauliques proximale 18A et distale 18B communiquent à nouveau entre elles.

On notera que les moyens de passage 44 sont conformés pour que le clapet 36 passe en position de dégagement uniquement lorsque le dispositif d'assistance 24 est en position de repos.

Dans le cas contraire, le piston 16 ne pourrait pas revenir en position de repos lorsque le clapet 36 serait en position de dégagement et que le dispositif d'assistance 24 serait actif.

En effet, lorsque le clapet 36 est en position de dégagement, le liquide de transmission passe par les moyens de communication 34, et n'applique donc pas d'effort sur le piston 16. Le piston 16 est alors uniquement rappelé en position de repos par le ressort de rappel 22.

Ainsi, dans le cas où le clapet 36 passerait en position de dégagement avant que le piston 16 soit en position de repos, ce piston 16 serait également soumis à l'effort renvoyé par la came 30, qui est opposé et supérieur à l'effort exercé par le ressort 22. Le piston 16 ne pourrait donc pas revenir en position de repos.

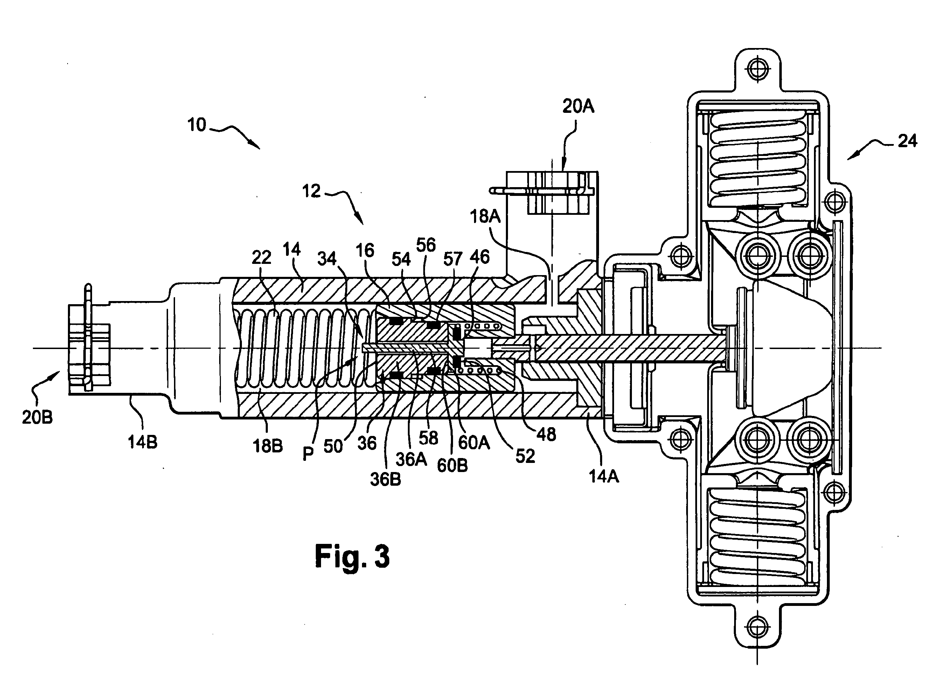

Sur les figures 3 à 8, les éléments similaires à ceux des figures précédentes sont désignés par des références identiques.

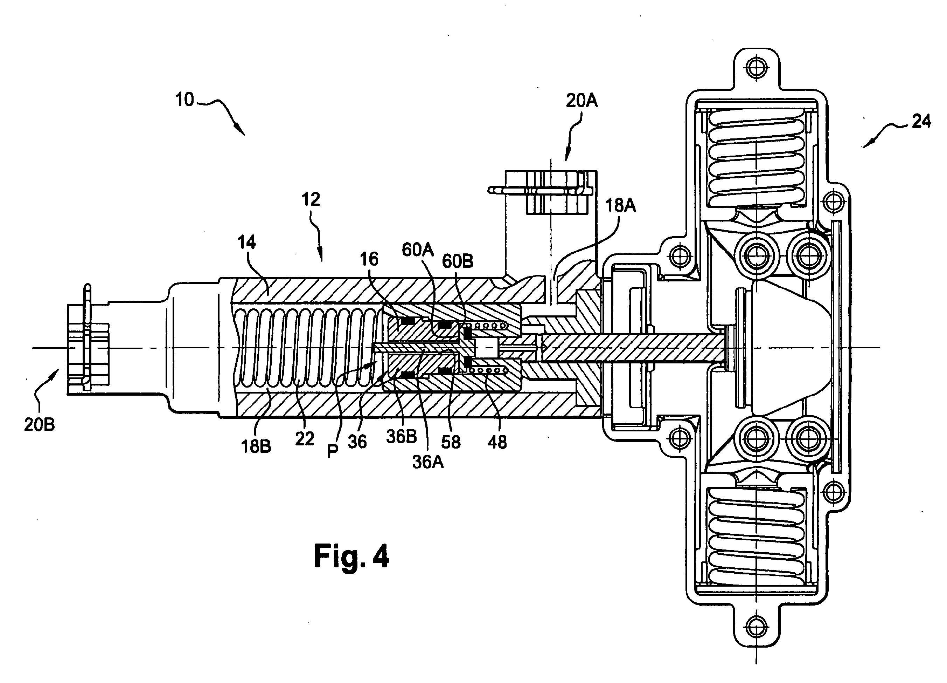

On a représenté sur les figures 3 et 4 un dispositif hydraulique de commande 12 selon un deuxième mode de réalisation de l'invention.

Conformément au deuxième mode de réalisation de l'invention, le clapet 36 est agencé dans le piston 16 de manière à se déplacer axialement dans ce piston 16 entre une position de dégagement représentée sur la figure 3 et une position d'obturation représentée sur la figure 4.

Dans ce cas, la première surface de pression hydraulique 50 est sensible à la pression dans la chambre hydraulique distale 18B et la seconde surface de pression hydraulique 52 est sensible à la pression dans la chambre hydraulique proximale 18A.

Les moyens de communication 34 comportent un orifice de communication 58 ménagé dans le clapet 36. Cet orifice de communication 58 est obturable par serrage de surfaces d'obturation complémentaires portées par le piston 16 et un joint d'étanchéité élastique 46 porté par la seconde surface de pression hydraulique 52.

De préférence, le clapet 36 comporte deux éléments mobiles l'un par rapport à l'autre, respectivement un élément male 36A, portant la seconde surface hydraulique de pression 52, et un élément femelle 36B, portant la première surface hydraulique de pression 50. Ces éléments male 36A et femelle 36B sont montés l'un dans l'autre avec un jeu formant l'orifice de communication 58.

En outre, les éléments male 36A et femelle 36B sont munis de faces complémentaires 60A, 60B d'appui axial mutuel. Au moins une de ces faces 60A, 60B est munie de bossages d'entretoisement mutuel de façon à autoriser le passage du liquide de transmission entre les surfaces 60A, 60B.

On précisera ci-dessous les principaux aspects du fonctionnement du dispositif hydraulique de commande 12 selon le second mode de réalisation de l'invention, liés à l'invention.

Lorsque le piston 16 est au repos, les moyens de communication 34 sont dégagés (figure 3). Ainsi, les chambres hydrauliques proximale 18A et distale 18B communiquent ensemble, et la pression est sensiblement la même dans ces deux chambres hydrauliques, généralement sensiblement égale à la pression atmosphérique.

Dans ce cas, la force de rappel du clapet 36, complétée par d'éventuels frottements, est prédominante par rapport à la résultante des forces de pression appliquées au clapet 36, si bien que ce dernier est maintenu dans sa position de dégagement des moyens de communication 34.

Lorsque la pédale de commande est actionnée, le liquide de transmission est injecté dans la chambre hydraulique proximale 18A, faisant augmenter la pression dans les chambres hydrauliques proximale 18A et distale 18B.

Lorsque la pression devient supérieure au premier seuil prédéterminé, la force de pression appliquée à la première surface hydraulique 50 devient prédominante par rapport aux forces opposées appliquées au clapet 36, c'est à dire les forces de pression appliquées à la seconde surface hydraulique 52 et à la surface pneumatique 54, la force de rappel du ressort 48 et les frottements éventuels. Le clapet 36 passe alors dans la position d'obturation de l'orifice de communication 58, telle que représentée sur la figure 2, dans laquelle les surfaces d'obturation du joint d'étanchéité 46 et du piston 16 coopèrent entre elles.

Une fois l'orifice de communication 58 obturé, les chambres hydrauliques distale 18B et proximale 18A sont isolées l'une de l'autre. Le liquide de transmission injecté dans la chambre hydraulique proximale 18A provoque une augmentation de la pression dans cette chambre hydraulique proximale 18A. Le piston est alors poussé vers l'extrémité distale 14B du corps 14.

Lorsque la pédale de commande est relâchée, le piston 16 est rappelé vers sa position de repos et les pressions du liquide de transmission dans les chambres hydrauliques proximale 18A et distale 18B diminuent pour se rapprocher de, voire atteindre, la pression atmosphérique.

Lorsque la pression dans la chambre hydraulique distale 18B devient inférieure au second seuil prédéterminé, la force de rappel élastique du ressort 48 redevient prédominante, si bien que le clapet 36 revient en position de dégagement de l'orifice de communication 58. Les chambres hydrauliques proximale 18A et distale 18B communiquent à nouveau entre elles.

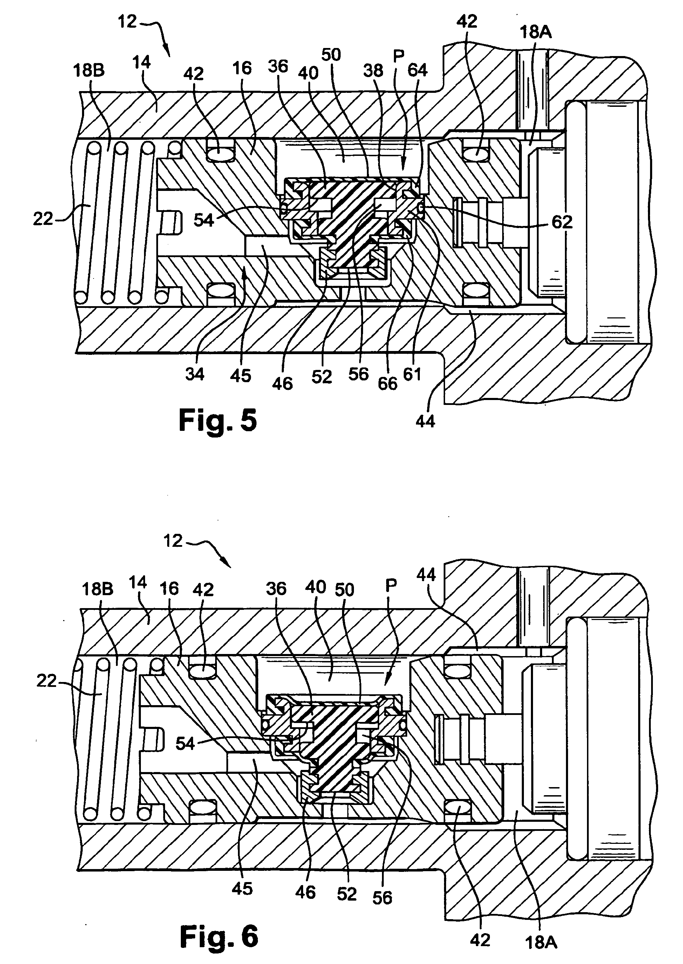

On a représenté sur les figures 5 et 6 un dispositif hydraulique de commande 12 selon un troisième mode de réalisation de l'invention.

Conformément à ce troisième mode de réalisation, le clapet 36 est agencé dans le piston 16 de manière à se déplacer transversalement dans ce piston 16 entre une position de dégagement représentée sur la figure 5 et une position d'obturation représentée sur la figure 6.

Dans ce cas, de la même manière que dans le premier mode de réalisation de l'invention, le piston 16 comporte une chambre hydraulique intermédiaire 40. Les première 50 et seconde 52 surfaces de pression hydraulique sont alors sensibles à la pression dans cette chambre hydraulique intermédiaire 40.

Selon ce troisième mode de réalisation, le piston 16 comporte un organe 61 formant un support de logement du clapet 36. Cet organe de support 61 est agencé dans le logement 38.

Un joint d'étanchéité 62 est agencé entre l'organe de support 61 et le contour du logement 38, afin d'empêcher le passage de liquide de transmission entre cet organe de support 61 et le piston 16.

Les moyens élastiques de rappel comportent une première membrane élastique 64, munie d'une zone périphérique liée de manière étanche à l'organe de support 61, par exemple par surmoulage ou par collage, et d'une zone centrale liée à la première surface hydraulique 50, par exemple par collage.

Les moyens élastiques de rappel comportent également une seconde membrane élastique 66, munie d'une zone périphérique liée de manière étanche à l'organe de support 61, par exemple par surmoulage ou par collage, et d'une zone centrale liée au clapet 36.

Les zones périphériques des première 64 et seconde 66 membranes élastiques sont donc liées au piston 16 par l'intermédiaire de l'organe de support 61.

En variante, la seconde membrane élastique 66 pourrait être venue de matière avec le joint d'étanchéité 46 destiné à obturer les moyens de communication 34.

Selon un mode de réalisation la membrane 66 et le joint élastique d'étanchéité annulaire 46 sont venus de matière ensemble.

Lorsque le clapet 36 se déplace, il entraîne avec lui les zones centrales des membranes élastiques 64, 66. Ces membranes élastiques 64, 66 se déforment alors en générant un effort de rappel vers leur position initiale, comme cela est visible sur la figure 6.

On notera que les deux membranes permettent également le guidage transversal du clapet 36, qui peut ainsi se déplacer sans frotter contre l'organe de support 61. L'absence d'effort de frottements entre le clapet 36 et l'organe de support 61 permet de mieux maîtriser le seuil prédéterminé de pression à partir duquel le clapet 36 se déplace.

Par ailleurs, les première 64 et seconde 66 membranes élastiques étant reliées de manière étanche à l'organe de support 61, elles remplissent avantageusement des rôles de joints d'étanchéité délimitant la chambre pneumatique 56.

Le montage du clapet 36 est très simple. En effet, tout d'abord, on forme un module comprenant l'organe de support 61, portant éventuellement le joint 32, le clapet 36 étant relié à cet organe de support 61 par les première 64 et seconde 66 membranes élastiques délimitant la chambre pneumatique 56 et formant les moyens élastiques de rappel du clapet 36.

Puis, on monte ce module dans le logement 38.

Le fonctionnement du dispositif hydraulique selon le troisième mode de réalisation de l'invention est similaire au fonctionnement du dispositif hydraulique selon le premier mode de réalisation de l'invention.

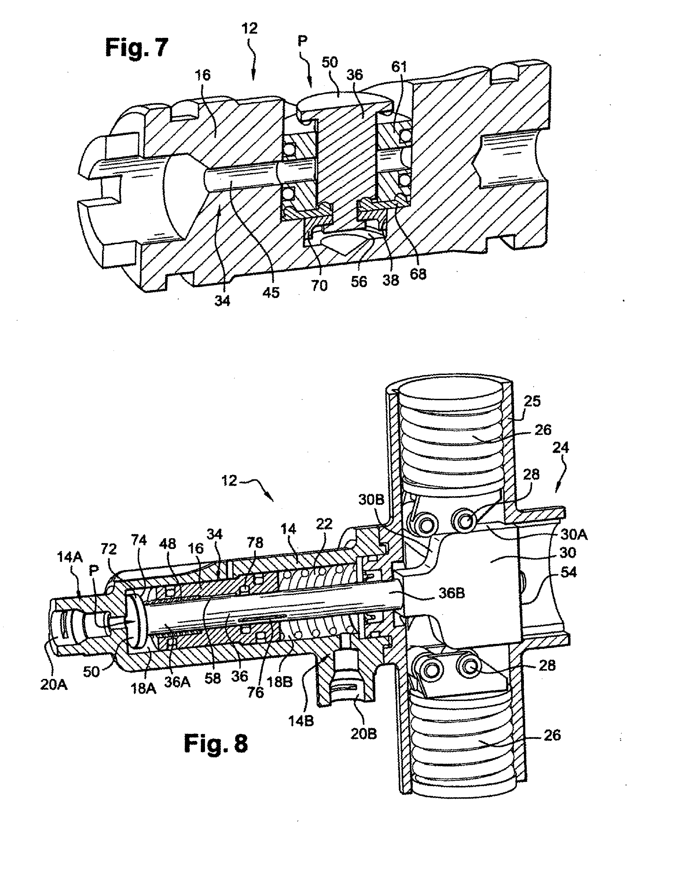

On a représenté sur la figure 7 un dispositif hydraulique de commande 12 selon un quatrième mode de réalisation de l'invention.

Conformément au quatrième mode de réalisation de l'invention, le clapet 36 est agencé dans le piston 16 de manière à se déplacer transversalement dans ce piston 16 entre une position de dégagement représentée sur la figure 7 et une position d'obturation (non représentée).

Selon ce quatrième mode de réalisation de l'invention, les moyens élastiques de rappel comportent une membrane élastique 68, munie d'une zone périphérique liée de manière étanche à l'organe de support 61, par exemple par pincement entre cet organe de support 61 et un épaulement du logement 38, et d'une zone centrale liée au clapet 36, par exemple par pincement entre un épaulement du clapet 36 et un organe de butée 70 coopérant avec la surface du logement 38.

Ainsi, lorsque le clapet 36 se déplace, il entraîne avec lui la zone centrale de la membrane élastique 68, qui se déforme alors en générant un effort de rappel vers sa position initiale.

On notera que la membrane 68 et l'organe de butée 70 permettent le guidage transversal du clapet 36, qui peut ainsi se déplacer sans frotter contre l'organe de support 61.

La membrane élastique 68 étant reliée de manière étanche au piston, elle forme avantageusement un joint d'étanchéité délimitant la chambre pneumatique 56 avec la surface du logement 38.

On notera que selon ce mode de réalisation, les moyens P d'application de force de pression ne comportent qu'une seule surface hydraulique 50 et une surface pneumatique 54.

Dans ce cas, le seuil prédéterminé de pression à partir duquel le clapet 36 se déplace dépend uniquement de la force élastique générée par la membrane élastique 68 et de la force de pression négligeable exercée sur la surface pneumatique 54. Ainsi, le clapet 36 se déplace dès que la force de pression appliquée à la surface hydraulique 50 est supérieure à la force élastique de rappel.

On a représenté sur la figure 8 un dispositif hydraulique de commande 12 selon un cinquième mode de réalisation de l'invention.

Conformément au cinquième mode de réalisation de l'invention, le clapet 36 est agencé dans le piston 16 de manière à se déplacer axialement dans ce piston 16 entre une position de dégagement, représentée sur la figure 8, et une position d'obturation (non représentée).

Le clapet 36 a une forme générale de tige montée mobile axialement dans le piston 16 avec un jeu radial formant l'orifice de communication 58.

Le clapet 36 comporte des extrémités proximale 36A et distale 36B, solidaires respectivement d'une tête 72 et de l'organe de renvoi d'effort 30.

La tête 72 comporte une première surface sensiblement plane formant la surface hydraulique 50, et une seconde surface sensiblement plane 74, opposée à la première, formant à la fois un siège pour le ressort 48 et une surface de butée contre le piston 16 lorsque le clapet 36 est en position d'obturation.

L'organe d'application d'effort 28 est en appui sur la première surface de came 30A lorsque le clapet 36 est dans sa position de dégagement. Par ailleurs, l'organe d'application d'effort 28 est en appui sur la seconde surface de came 30B lorsque le clapet 36 est dans sa position d'obturation. La came 30 est donc susceptible de renvoyer un effort d'assistance au déplacement du clapet 36, qui est transmis au piston 16 par l'intermédiaire de la seconde surface 74 en butée contre ce piston 16.

Par ailleurs, l'organe 30 de renvoi d'effort étant agencé en dehors du corps 14, il comporte une surface en contact avec de l'air, formant la surface pneumatique 54.

Le clapet 36 comporte également des moyens 76 de passage de liquide, destinés à faire communiquer la chambre hydraulique distale 18B et l'orifice de communication 58 lorsque le clapet 36 est dans sa position de dégagement.

Ces moyens de passage 76 sont conformés de façon que la chambre hydraulique distale 18B et l'orifice de communication 58 sont isolés l'un de l'autre lorsque le clapet 36 a parcouru une course prédéterminée. De préférence, un joint d'étanchéité annulaire 78 est agencé sur le piston 16 de manière à assurer l'isolation entre les moyens de passage 76 et l'orifice de communication 58.

On précisera ci-dessous les principaux aspects du fonctionnement du dispositif hydraulique de commande 12 selon le cinquième mode de réalisation de l'invention, liés à l'invention.

Lorsque le piston 16 est au repos, les moyens de communication 34 sont dégagés (figure 8). Les chambres hydrauliques proximale 18A et distale 18B communiquent ensemble par l'intermédiaire des moyens de passage 76 et de l'orifice de communication 58, et la pression est sensiblement la même dans ces deux chambres hydrauliques, généralement sensiblement égale à la pression atmosphérique.

Dans ce cas, la force de rappel du clapet 36, complétée par d'éventuels frottements, est prédominante par rapport à la résultante des forces de pression appliquées au clapet 36, si bien que ce dernier est maintenu dans sa position de dégagement des moyens de communication 34.

Lorsque la pédale de commande est actionnée, le liquide de transmission est injecté dans la chambre hydraulique proximale 18A, faisant augmenter la pression dans les chambres hydrauliques proximale 18A et distale 18B.

Lorsque la pression devient supérieure au premier seuil prédéterminé, la force de pression appliquée à la première surface hydraulique 50 devient prédominante par rapport aux forces opposées appliquées au clapet 36, c'est à dire la force de pression appliquées à la surface pneumatique 54, la force de rappel du ressort 48 et les frottements éventuels. Le clapet 36 se déplace alors vers sa position d'obturation des moyens de communication 34, entraînant l'organe 30 de renvoi d'effort dans son déplacement.

Le clapet 36 est dans sa position d'obturation lorsque les moyens de passage 76 n'autorisent plus la communication entre la chambre hydraulique distale 18B et l'orifice de communication 56.

Lorsque le clapet est dans cette position d'obturation, la seconde surface 74 de la tête 72 vient en butée contre le piston 16, ce qui permet le renvoi de l'effort d'assistance au déplacement de la came 30 au piston 16.

Lorsque l'orifice de communication 58 est obturé, les chambres hydrauliques distale 18B et proximale 18A sont isolées l'une de l'autre. Le liquide de transmission injecté dans la chambre hydraulique proximale 18A provoque une augmentation de la pression dans cette chambre hydraulique proximale 18A. Le piston est alors poussé vers l'extrémité distale 14B du corps 14.

Lorsque la pédale de commande est relâchée, le piston 16 est rappelé vers sa position de repos, entraînant l'organe de renvoi d'effort 30 dans son déplacement, et les pressions du liquide de transmission dans les chambres hydrauliques proximale 18A et distale 18B diminuent pour se rapprocher de, voire atteindre, la pression atmosphérique.

Lorsque le piston 16 est dans sa position de repos, l'organe de renvoi d'effort 30 coopère avec l'organe d'application d'effort 28 sur sa première surface de came 30A, parallèle au déplacement du clapet 36. Le clapet 36 peut ainsi se déplacer vers sa position de dégagement sans que son mouvement soit gêné par l'organe de renvoi d'effort 30.

Lorsque la pression dans la chambre hydraulique distale 18B devient inférieure au second seuil prédéterminé, la force de rappel élastique du ressort 48 redevient prédominante, si bien que le clapet 36 revient en position de dégagement de l'orifice de communication 58. Les chambres hydrauliques proximale 18A et distale 18B communiquent à nouveau entre elles.

On notera que l'invention n'est pas limitée aux modes de réalisation précédemment décrits.

En effet, on pourrait notamment combiner des caractéristiques de plusieurs modes de réalisation sans pour autant sortir du cadre de l'invention.

## Revendications

1. Dispositif hydraulique de commande (12) du type comportant un piston (16) de commande :
- monté mobile dans un corps (14),
- séparant dans ce corps des chambres hydrauliques proximale (18A) et distale (18B) de volumes variables,
- comportant des moyens de communication (34) entre les chambres hydrauliques obturables par un organe (36) formant clapet monté mobile dans le piston (16) entre des positions d'obturation et de dégagement des moyens de communication (34),
**caractérisé en ce que** le piston (16) porte des moyens élastiques (48 ; 64, 66 ; 68) de rappel de l'organe formant clapet (36) en position de dégagement, l'organe formant clapet (36) comportant des moyens (P) d'application de force de pression (50, 52, 54) sollicitant cet organe formant clapet (36) à l'encontre de sa force de rappel par effet de pression fluidique sur les moyens (P) d'application de force de pression.

2. Dispositif hydraulique de commande (12) selon la revendication 1,
**caractérisé en ce que** les moyens (P) d'application de force de pression comportent au moins une surface de pression hydraulique (50, 52) et une surface de pression pneumatique (54).

3. Dispositif hydraulique de commande (12) selon la revendication 2,
**caractérisé en ce que** les moyens (P) d'application de force de pression comportent des première (50) et seconde (52) surfaces de pression hydraulique d'aires efficaces différentes sollicitant l'organe formant clapet (36) à l'encontre de sa force de rappel par effet de force pression différentielle, et une surface de pression pneumatique (54) d'aire efficace correspondant à la différence des aires efficaces des surfaces de pression hydraulique (50, 52).

4. Dispositif hydraulique de commande (12) selon la revendication 2 ou 3,
**caractérisé en ce que** la surface de pression pneumatique (54) délimite une chambre pneumatique (56) fermée de volume variable contenant de préférence de l'air.

5. Dispositif hydraulique de commande (12) selon l'une quelconque des revendications précédentes, **caractérisé en ce que** l'organe formant clapet (36) est déplaçable en translation dans un logement de guidage (38) ménagé dans le piston (16).

6. Dispositif hydraulique de commande (12) selon la revendication 5,
**caractérisé en ce que** les surfaces de pression hydrauliques (50, 52) et pneumatique (54) sont sensiblement planes et sensiblement perpendiculaires à la direction de déplacement de l'organe formant clapet (36).

7. Dispositif hydraulique de commande (12) selon l'une quelconque des revendications 4 à 6, **caractérisé en ce que** la chambre pneumatique (56) s'étend entre deux joints d'étanchéité (57), agencés entre l'organe formant clapet (36) et le piston de commande (16), isolant cette chambre pneumatique (56) des chambres hydrauliques (18A, 18B).

8. Dispositif hydraulique de commande (12) selon l'une quelconque des revendications 4 à 6, **caractérisé en ce que** la chambre pneumatique (56) s'étend entre un organe d'étanchéité (68), isolant cette chambre pneumatique (56) des chambres hydrauliques (18A, 18B), et une paroi ménagée dans le piston (16).

9. Dispositif hydraulique de commande (12) selon l'une quelconque des revendications 1 à 8, **caractérisé en ce que** les moyens élastiques comportent un ressort de compression (48) en appui entre un premier siège ménagé sur le piston (16) et un second siège ménagé sur l'organe formant clapet (36).

10. Dispositif hydraulique de commande (12) selon l'une quelconque des revendications 1 à 8, **caractérisé en ce que** les moyens élastiques de rappel comportent au moins une membrane élastique (64, 66 ; 68), comprenant une zone périphérique liée au piston (16) et une zone centrale liée à l'organe formant clapet (36).

11. Dispositif hydraulique de commande (12) selon les revendications 4 et 10 prises ensemble, **caractérisé en ce que** les moyens élastiques de rappel comportent deux membranes élastiques étanches (64, 66), la chambre pneumatique (56) s'étendant entre ces deux membranes (64, 66).

12. Dispositif hydraulique de commande (12) selon l'une quelconque des revendications 1 à 11, **caractérisé en ce que** l'organe formant clapet (36) est agencé dans le piston (16) de commande de manière à se déplacer transversalement dans ce piston (16).

13. Dispositif hydraulique de commande (12) selon la revendication 12,
**caractérisé en ce que** les moyens de communication (34) comportent un orifice (45) de communication, ménagé dans le piston (16), obturable par serrage de surfaces d'obturations complémentaires portées par le piston (16) et un joint d'étanchéité (46) porté par l'organe formant clapet (36).

14. Dispositif hydraulique de commande (12) selon la revendication 12 ou 13,
**caractérisé en ce que** l'organe formant clapet (36) s'étend dans une chambre hydraulique intermédiaire (40) délimitée par deux joints d'étanchéité (42) agencés entre le piston (16) de commande et le corps (14).

15. Dispositif hydraulique de commande (12) selon la revendication 14,
**caractérisé en ce qu'**il comporte des moyens (44) de passage de liquide, ménagés dans le piston (16) ou dans le corps (14), destinés à faire communiquer la chambre intermédiaire hydraulique (40) avec la chambre proximale (18A).

16. Dispositif hydraulique de commande (12) selon la revendication 15,
**caractérisé en ce que** les moyens de passage (44) sont ménagés dans le corps (14) de sorte que, lorsque le piston (16) a parcouru une course prédéterminée, la chambre intermédiaire hydraulique (40) et la chambre proximale (18A) sont isolées l'une de l'autre.

17. Dispositif hydraulique de commande (12) selon l'une quelconque des revendications 12 à 16, **caractérisé en ce que** l'organe formant clapet (36) est muni d'une butée (49), ménagé sur la première surface de pression hydraulique (50), destiné à coopérer avec une butée complémentaire ménagée sur le corps (14) lorsque l'organe formant clapet (36) est en position de dégagement.

18. Dispositif hydraulique de commande (12) selon l'une quelconque des revendications 1 à 11, **caractérisé en ce que** l'organe formant clapet (36) est agencé dans le piston (16) de manière à se déplacer axialement dans ce piston (16).

19. Dispositif hydraulique de commande (12) selon la revendication 18,
**caractérisé en ce que** les moyens de communication (34) comportent un orifice (45) de communication ménagé dans l'organe formant clapet (36), obturable par serrage de surfaces d'obturations complémentaires portées par le piston (16) et un joint d'étanchéité (46) porté par l'organe formant clapet (36).

20. Dispositif hydraulique de commande (12) selon la revendication 18,
**caractérisé en ce que** l'organe formant clapet (36) a une forme générale de tige montée mobile axialement avec un jeu dans le piston (16), les moyens de communication (34) comportant un orifice (58) de communication formé par ce jeu.

21. Dispositif hydraulique de commande (12) selon la revendication 20,
**caractérisé en ce que** l'organe formant clapet (36) comporte des moyens de passage de liquide, conformés de façon que la chambre hydraulique distale (18B) et l'orifice de communication (58) communiquent ensemble lorsque l'organe formant clapet (36) est dans sa position de dégagement, et que la chambre hydraulique distale (18B) et l'orifice de communication (58) sont isolés l'un de l'autre lorsque l'organe formant clapet (36) est dans sa position d'obturation.

22. Dispositif hydraulique de commande (12) selon la revendication 20 ou 21,
**caractérisé en ce que** l'organe formant clapet (36) comporte une extrémité proximale solidaire d'une tête comportant une première surface plane formant la surface hydraulique (50) et une seconde surface plane, opposée à la première, formant à la fois un siège pour les moyens élastiques de rappel (48) et une surface d'appui pour le piston (16) lorsque l'organe formant clapet (36) est en position d'obturation.

23. Dispositif hydraulique de commande (12) selon l'une quelconque des revendications précédentes, **caractérisé en ce que** l'organe formant clapet (36) est apte à se déplacer en position d'obturation lorsque la pression dans les chambres hydrauliques (18A, 18B) est supérieure à un seuil prédéterminé inférieur à 10 bars, de préférence inférieur à 5 bars, la pression supérieure à ce seuil permettant notamment de vaincre la force de rappel des moyens élastiques (48).

24. Module à clapet pour un dispositif hydraulique de commande selon l'une quelconque des revendications 11-17, avec des moyens (P) d'application de force de pression qui comportent au moins une surface de pression hydraulique (50, 52) et une surface de pression pneumatique (54), la surface de pression pneumatique (54) délimitant une chambre pneumatique (56) fermée de volume variable contenant de préférence de l'air, et avec des moyens élastiques de rappel qui comportent deux membranes élastiques étanches (64, 66), la chambre pneumatique (56) s'étendant entre ces deux membranes (64, 66), et avec un organe formant clapet (36) destiné à être monté mobile dans un piston entre des positions d'observation et de dégagement
**caractérisé en ce qu'**il comprend un organe de support (61), destiné à être agencé dans le piston (16), l'organe formant clapet (36) étant relié à cet organe de support (61) par les deux membranes élastiques (64, 66).

25. Ensemble d'assistance pour système de commande hydraulique d'embrayage, **caractérisé en ce qu'**il comporte un dispositif hydraulique de commande (12) selon l'une quelconque des revendications 1 à 23 et un dispositif (24) pour l'assistance au déplacement du piston (16).

26. Ensemble d'assistance selon la revendication 25, comportant un dispositif hydraulique de commande selon l'une quelconque des revendications 20 à 23,
**caractérisé en ce que** le clapet (36) comporte une extrémité distale solidaire d'un organe de renvoi d'effort (30) du dispositif d'assistance, l'organe de renvoi d'effort présentant une surface en contact avec de l'air, formant la surface pneumatique (54).

27. Système de commande hydraulique d'embrayage, **caractérisé en ce qu'**il comporte un dispositif hydraulique de commande (12) selon l'une quelconque des revendications 1 à 23.

## Claims

1. Hydraulic control device (12) of the type comprising a control piston (6) which:
- is fitted such as to be mobile in a body (14);
- separates in this body proximal (18A) and distal (18B) hydraulic chambers with variable volumes;
- comprises means (34) for communication between the hydraulic chambers which can be shut by means of a unit (36) which forms a flap valve that is fitted such as to be mobile in the piston (16), between positions of shutting and clearance of the means (34) for communication,
**characterised in that** the piston (16) bears resilient means (48; 64, 66; 68) for return of the unit (36) which forms a flap valve to the clearance position, the unit (36) which forms a flap valve comprising means (P) for application of pressure force (50, 52, 54) which thrust this unit (36) which forms a flap valve against its return force by the effect of fluidic pressure on the means (P) for application of pressure force.

2. Hydraulic control device (12) according to claim 1, **characterised in that** the means (P) for application of pressure force comprise at least one hydraulic pressure surface (50, 52) and one pneumatic pressure surface (54).

3. Hydraulic control device (12) according to claim 2, **characterised in that** the means (P) for application of pressure force comprise first (50) and second (52) hydraulic pressure surfaces with different efficient areas, which thrust the unit (36) which forms a flap valve against its return force by the effect of differential pressure force, and a pneumatic pressure surface (54) with a corresponding efficient area which corresponds to the difference in the efficient areas of the hydraulic pressure surfaces (50,52).

4. Hydraulic control device (12) according to claim 2 or 3, **characterised in that** the pneumatic pressure surface (54) delimits a closed pneumatic chamber (56) with a variable volume which preferably contains air.

5. Hydraulic control device (12) according to any one of the preceding claims,
**characterised in that** the unit (36) which forms a flap valve can be displaced in translation in a guide receptacle (38) which is provided in the piston (16).

6. Hydraulic control device (12) according to claim 5, **characterised in that** the hydraulic (50, 52) and pneumatic (54) pressure surfaces are substantially flat and substantially perpendicular to the direction of displacement of the unit (36) which forms a flap valve.

7. Hydraulic control device (12) according to any one of claims 4 to 6, **characterised in that** the pneumatic chamber (56) extends between two seals (57) which are provided between the unit (36) which forms a flap valve and the control piston (16), thus isolating this pneumatic chamber (56) from the hydraulic chambers (18A, 18B).

8. Hydraulic control device (12) according to any one of claims 4 to 6, **characterised in that** the pneumatic chamber (56) extends between a sealing unit (68) which isolates this pneumatic chamber (56) from the hydraulic chambers (18A, 18B), and a wall which is provided in the piston (16).

9. Hydraulic control device (12) according to any one of claims 1 to 8, **characterised in that** the resilient means comprise a compression spring (48) which is supported between a first seat which is provided on the piston (16) and a second seat which is provided on the unit (36) which forms a flap valve.

10. Hydraulic control device (12) according to any one of claims 1 to 8, **characterised in that** the resilient return means comprise at least one resilient membrane (64, 66; 68) comprising a peripheral area which is connected to the piston (16), and a central area which is connected to the unit (36) which forms a flap valve.

11. Hydraulic control device (12) according to claims 4 and 10 taken together,
**characterised in that** the resilient return means comprise two sealed resilient membranes (64, 66), the pneumatic chamber (56) extending between these two membranes (64, 66).

12. Hydraulic control device (12) according to any one of claims 1 to 11, **characterised in that** the unit (36) which forms a flap valve is arranged in the control piston (16) such as to be displaced transversely in this piston (16).

13. Hydraulic control device (12) according to claim 12, **characterised in that** the means (34) for communication comprise a communication aperture (45) which is provided in the piston (16), and can be shut by clamping of complementary shutting surfaces which the piston (16) bears, and a seal (46) which the unit (36) which forms a flap valve bears.

14. Hydraulic control device (12) according to claim 12 or 13, **characterised in that** the unit (36) which forms a flap valve extends in an intermediate hydraulic chamber (40) which is delimited by two seals (42) which are arranged between the control piston (16) and the body (14).

15. Hydraulic control device (12) according to claim 14, **characterised in that** it comprises means (44) for passage of fluid, which are provided in the piston (16) or in the body (14), and are designed to make the intermediate hydraulic chamber (40) communicate with the proximal chamber (18A).

16. Hydraulic control device (12) according to claim 15, **characterised in that** the means (44) for passage are provided in the body (14), such that, when the piston (16) has travelled along a predetermined course, the intermediate hydraulic chamber (40) and the proximal chamber (18A) are isolated from one another.

17. Hydraulic control device (12) according to any one of claims 12 to 16, **characterised in that** the unit (36) which forms a flap valve is provided with a stop (49) which is disposed on the first hydraulic pressure surface (50), and is designed to co-operate with a complementary stop disposed on the body (14), when the unit (36) which forms a flap valve is in the clearance position.

18. Hydraulic control device (12) according to any one of claims 1 to 11, **characterised in that** the unit (36) which forms a flap valve is arranged in the piston (16) such as to be displaced axially in this piston (16).

19. Hydraulic control device (12) according to claim 18, **characterised in that** the means (34) for communication comprise a communication aperture (45) which is provided in the unit (36) which forms a flap valve, and can be shut by clamping of complementary shutting surfaces which the piston (16) bears, and a seal (46) which the unit (36) which forms a flap valve bears.

20. Hydraulic control device (12) according to claim 18, **characterised in that** the unit (36) which forms a flap valve is in the general form of a rod which is fitted such as to be mobile axially with play in the piston (16), the means (34) for communication comprising a communication aperture (58) which is formed by this play.

21. Hydraulic control device (12) according to claim 20, **characterised in that** the unit (36) which forms a flap valve comprises means for passage of fluid, formed such that the distal hydraulic chamber (18B) and the communication aperture (58) communicate with one another when the unit (36) which forms a flap valve is in its clearance position, and the distal hydraulic chamber (18B) and the communication aperture (58) are isolated from one another when the unit (36) which forms a flap valve is in its shutting position.

22. Hydraulic control device (12) according to claim 20 or 21, **characterised in that** the unit (36) which forms a flap valve comprises a proximal end which is integral with a head comprising a first flat surface which forms the hydraulic surface (50), and a second flat surface, opposite the first, which forms both a seat for the resilient return means (48) and a support surface for the piston (16), when the unit (36) which forms a flap valve is in the shutting position.

23. Hydraulic control device (12) according to any one of the preceding claims,
**characterised in that** the unit (36) which forms a flap valve can be displaced into the shutting position when the pressure in the hydraulic chambers (18A, 18B) is greater than a predetermined threshold which is lower than 10 bars, and preferably lower than 5 bars, the pressure which is greater than this threshold making it possible in particular to overcome the return force of the resilient means (48).

24. Flap-valve module for a hydraulic control device according to any one of claims 11 to 17, with means (P) for application of pressure force which comprise at least one hydraulic pressure surface (50, 52) and one pneumatic pressure surface (54), the pneumatic pressure surface (54) delimiting a closed pneumatic chamber (56) with a variable volume which preferably contains air, and with resilient return means which comprise two sealed resilient membranes (64, 66), the pneumatic chamber (56) extending between these two membranes (64, 66), and with a unit (36) which forms a flap valve and is designed to be fitted such as to be mobile in a piston between positions of shutting and clearance,
**characterised in that** it comprises a support unit (61) which is designed to be arranged in the piston (16), the unit (36) which forms a flap valve being connected to this support unit (61) by the two resilient membranes (64, 66).

25. Assistance assembly for a clutch hydraulic control system, **characterised in that** it comprises a hydraulic control device (12) according to any one of claims 1 to 23, and a device (24) for assistance with displacement of the piston (16).

26. Assistance assembly according to claim 25, comprising a hydraulic control device according to any one of claims 20 to 23, **characterised in that** the flap valve (36) comprises a distal end which is integral with a force return unit (30) of the assistance device, the force return unit having a surface which is in contact with the air, thus forming the pneumatic surface (54).

27. Clutch hydraulic control system, **characterised in that** it comprises a hydraulic control device (12) according to any one of claims 1 to 23.

## Patentansprüche

1. Hydraulische Betätigungsvorrichtung (12) mit einem Betätigungskolben (16), der:
- beweglich in einem Körper (14) gelagert ist,
- in diesem Körper proximale (18A) und distale (18B) Hydraulikkammern mit veränderlichen Volumina trennt,
- Verbindungsmittel (34) zwischen den Hydraulikkammern umfasst, die durch ein als Klappe dienendes Organ (36) verschließbar sind, das im Kolben (16) beweglich zwischen einer Schließ- und einer Freigabeposition zum Verschluss bzw. zur Freigabe der Verbindungsmittel (34) gelagert ist,
**dadurch gekennzeichnet, dass** der Kolben (16) elastische Rückstellmittel (48; 64, 66; 68) zur Rückstellung des als Klappe dienenden Organs (36) in die Freigabeposition trägt, wobei das als Klappe dienende Organ (36) Mittel (P) zum Anlegen einer Druckkraft (50, 52, 54) umfasst, welche dieses als Klappe dienende Organ (36) entgegen seiner Rückstellkraft durch Fluiddruckeinwirkung auf die Mittel (P) zum Anlegen einer Druckkraft beaufschlagen.

2. Hydraulische Betätigungsvorrichtung (12) nach Anspruch 1,
**dadurch gekennzeichnet, dass** die Mittel (P) zum Anlegen einer Druckkraft mindestens eine hydraulische Druckfläche (50, 52) und eine pneumatische Druckfläche (54) umfassen.

3. Hydraulische Betätigungsvorrichtung (12) nach Anspruch 2,
**dadurch gekennzeichnet, dass** die Mittel (P) zum Anlegen einer Druckkraft erste (50) und zweite (52) hydraulische Druckflächen mit unterschiedlichen Wirkflächen, die das als Klappe dienende Organ (36) entgegen seiner Rückstellkraft durch Differenzdruckkraft beaufschlagen, und eine pneumatische Druckfläche (54) mit einer Wirkfläche umfassen, die der Differenz der Wirkflächen der hydraulischen Druckflächen (50, 52) entspricht.

4. Hydraulische Betätigungsvorrichtung (12) nach Anspruch 2 oder 3,
**dadurch gekennzeichnet, dass** die pneumatische Druckfläche (54) eine geschlossene Pneumatikkammer (56) mit veränderlichem Volumen begrenzt, die vorzugsweise Luft enthält.

5. Hydraulische Betätigungsvorrichtung (12) nach einem der vorangehenden Ansprüche, **dadurch gekennzeichnet, dass** das als Klappe dienende Organ (36) in einer in den Kolben (16) eingearbeiteten Führungsaufnahme (38) translatorisch verschiebbar ist.

6. Hydraulische Betätigungsvorrichtung (12) nach Anspruch 5,
**dadurch gekennzeichnet, dass** die hydraulischen Druckflächen (50, 52) und die pneumatische Druckfläche (54) in etwa eben sind und in etwa senkrecht zur Verschieberichtung des als Klappe dienenden Organs (36) verlaufen.

7. Hydraulische Betätigungsvorrichtung (12) nach einem der Ansprüche 4 bis 6, **dadurch gekennzeichnet, dass** sich die Pneumatikkammer (56) zwischen zwei Dichtungen (57) erstreckt, die zwischen dem als Klappe dienenden Organ (36) und dem Betätigungskolben (16) angeordnet sind und diese Pneumatikkammer (56) von den Hydraulikkammern (18A, 18B) trennen.

8. Hydraulische Betätigungsvorrichtung (12) nach einem der Ansprüche 4 bis 6, **dadurch gekennzeichnet, dass** sich die Pneumatikkammer (56) zwischen einem Dichtungsorgan (68), das diese Pneumatikkammer (56) von den Hydraulikkammern (18A, 18B) trennt, und einer in den Kolben (16) eingearbeiteten Wand erstreckt.

9. Hydraulische Betätigungsvorrichtung (12) nach einem der Ansprüche 1 bis 8, **dadurch gekennzeichnet, dass** die elastischen Mittel eine Druckfeder (48) in Anlage zwischen einer am Kolben (16) eingearbeiteten ersten Sitzfläche und einer an dem als Klappe dienenden Organ (36) eingearbeiteten zweiten Sitzfläche umfassen.

10. Hydraulische Betätigungsvorrichtung (12) nach einem der Ansprüche 1 bis 8, **dadurch gekennzeichnet, dass** die elastischen Rückstellmittel mindestens eine elastische Membran (64, 66; 68) umfassen, die einen mit dem Kolben (16) verbundenen Umfangsbereich und einen mit dem als Klappe dienenden Organ (36) verbundenen Mittelbereich umfassen.

11. Hydraulische Betätigungsvorrichtung (12) nach den Ansprüchen 4 und 10 zusammengenommen, **dadurch gekennzeichnet, dass** die elastischen Rückstellmittel zwei dichte elastische Membranen (64, 66) umfassen, wobei sich die Pneumatikkammer (56) zwischen diesen beiden Membranen (64, 66) erstreckt.

12. Hydraulische Betätigungsvorrichtung (12) nach einem der Ansprüche 1 bis 11, **dadurch gekennzeichnet, dass** das als Klappe dienende Organ (36) im Betätigungskolben (16) so angeordnet ist, dass es sich in diesem Kolben (16) in Querrichtung bewegt.

13. Hydraulische Betätigungsvorrichtung (12) nach Anspruch 12,
**dadurch gekennzeichnet, dass** die Verbindungsmittel (34) eine Verbindungsöffnung (45), die in den Kolben (16) eingearbeitet und durch Zusammendrücken von am Kolben (16) angebrachten komplementären Verschlussflächen verschließbar ist, und eine an dem als Klappe dienenden Organ (36) angebrachte Dichtung (46) umfassen.

14. Hydraulische Betätigungsvorrichtung (12) nach Anspruch 12 oder 13,
**dadurch gekennzeichnet, dass** sich das als Klappe dienende Organ (36) in einer Zwischenhydraulikkammer (40) erstreckt, die durch zwei zwischen dem Betätigungskolben (16) und dem Körper (14) angeordnete Dichtungen (42) begrenzt wird.

15. Hydraulische Betätigungsvorrichtung (12) nach Anspruch 14,
**dadurch gekennzeichnet, dass** sie in den Kolben (16) oder in den Körper (14) eingearbeitete Flüssigkeitsdurchlassmittel (44) umfasst, die dazu bestimmt sind, eine Verbindung der Zwischenhydraulikkammer (40) mit der proximalen Kammer (18A) herzustellen.

16. Hydraulische Betätigungsvorrichtung (12) nach Anspruch 15,
**dadurch gekennzeichnet, dass** die Durchlassmittel (44) so in den Körper (14) eingearbeitet sind, dass die Zwischenhydraulikkammer (40) und die proximale Kammer (18A) voneinander getrennt sind, wenn der Kolben (16) einen vorbestimmten Verstellweg zurückgelegt hat.

17. Hydraulische Betätigungsvorrichtung (12) nach einem der Ansprüche 12 bis 16, **dadurch gekennzeichnet, dass** das als Klappe dienende Organ (36) mit einem auf der ersten hydraulischen Druckfläche (50) vorgesehenen Anschlag (49) versehen ist, der dazu bestimmt ist, mit einem auf dem Körper (14) vorgesehenen komplementären Anschlag zusammenzuwirken, wenn sich das als Klappe dienende Organ (36) in der Freigabeposition befindet.

18. Hydraulische Betätigungsvorrichtung (12) nach einem der Ansprüche 1 bis 11, **dadurch gekennzeichnet, dass** das als Klappe dienende Organ (36) so im Kolben (16) angeordnet ist, dass es sich in diesem Kolben (16) axial bewegt.

19. Hydraulische Betätigungsvorrichtung (12) Anspruch 18,
**dadurch gekennzeichnet, dass** die Verbindungsmittel (34) eine Verbindungsöffnung (45), die in das als Klappe dienende Organ (36) eingearbeitet und durch das Zusammendrücken von am Kolben (16) angebrachten komplementären Verschlussflächen verschließbar ist, und eine an dem als Klappe dienenden Organ (36) angebrachte Dichtung (46) umfassen.

20. Hydraulische Betätigungsvorrichtung (12) nach Anspruch 18,
**dadurch gekennzeichnet, dass** das als Klappe dienende Organ (36) die allgemeine Form einer Stange hat, die mit einem Spiel axial beweglich im Kolben (16) gelagert ist, wobei die Verbindungsmittel (34) eine durch dieses Spiel gebildete Verbindungsöffnung (58) umfassen.

21. Hydraulische Betätigungsvorrichtung (12) nach Anspruch 20,
**dadurch gekennzeichnet, dass** das als Klappe dienende Organ (36) Flüssigkeitsdurchlassöffnungen umfasst, die so gestaltet sind, dass die distale Hydraulikkammer (18B) und die Verbindungsöffnung (58) miteinander in Verbindung stehen, wenn sich das als Klappe dienende Organ (36) in seiner Freigabeposition befindet, und dass die distale Hydraulikkammer (18B) und die Verbindungsöffnung (58) voneinander getrennt sind, wenn sich das als Klappe dienende Organ (36) in seiner Schließposition befindet.

22. Hydraulische Betätigungsvorrichtung (12) nach Anspruch 20 oder 21,
**dadurch gekennzeichnet, dass** das als Klappe dienende Organ (36) ein proximales Ende umfasst, das fest mit einem Kopf verbunden ist, der eine erste ebene Fläche, die die hydraulische Fläche (50) bildet, und eine der ersten gegenüberliegenden zweite ebene Fläche aufweist, die sowohl eine Sitzfläche für die elastischen Rückstellmittel (48) als auch eine Auflagefläche für den Kolben (16) bildet, wenn sich das als Klappe dienende Organ (36) in der Schließposition befindet.

23. Hydraulische Betätigungsvorrichtung (12) nach einem der vorangehenden Ansprüche, **dadurch gekennzeichnet, dass** das als Klappe dienende Organ (36) in der Lage ist, sich in die Schließposition zu bewegen, wenn der Druck in den Hydraulikkammern (18A, 18B) größer als ein vorbestimmter Schwellenwert unter 10 bar, vorzugsweise unter 5 bar, ist, wobei der Druck oberhalb dieses Schwellenwerts es insbesondere ermöglicht, die Rückstellkraft der elastischen Mittel (48) zu überwinden.

24. Klappenmodul für eine hydraulische Betätigungsvorrichtung nach einem der Ansprüche 11 bis 17 mit Mitteln (P) zum Anlegen einer Druckkraft, die mindestens eine hydraulische Druckfläche (50, 52) und eine pneumatische Druckfläche (54) umfassen, wobei die pneumatische Druckfläche (54) eine geschlossene Pneumatikkammer (56) mit veränderlichem Volumen begrenzt, die vorzugsweise Luft enthält, und mit elastischen Rückstellmitteln, die zwei dichte elastische Membranen (64, 66) umfassen, wobei sich die Pneumatikkammer (56) zwischen diesen beiden Membranen (64, 66) erstreckt, sowie mit einem als Klappe dienenden Organ (36), das dazu bestimmt ist, im Kolben beweglich zwischen einer Schließ- und einer Freigabeposition gelagert zu sein,
**dadurch gekennzeichnet, dass** es ein Trägerorgan (61) umfasst, das dazu bestimmt ist, im Kolben (16) angeordnet zu sein, wobei das als Klappe dienende Organ (36) durch die beiden elastischen Membranen (64, 66) mit diesem Trägerorgan (61) verbunden ist.

25. Unterstützungseinheit für ein hydraulisches Kupplungsbetätigungssystem, **dadurch gekennzeichnet, dass** es eine hydraulische Betätigungsvorrichtung (12) nach einem der Ansprüche 1 bis 23 und eine Vorrichtung (24) zur Unterstützung der Bewegung des Kolbens (16) umfasst.

26. Unterstützungseinheit nach Anspruch 25 mit einer hydraulischen Betätigungsvorrichtung nach einem der Ansprüche 20 bis 23,
**dadurch gekennzeichnet, dass** die Klappe (36) ein distales Ende umfasst, das fest mit einem Kraftumlenkungsorgan (30) für die Unterstützungsvorrichtung verbunden ist, wobei das Kraftumlenkungsorgan eine mit der Luft in Kontakt befindliche Fläche aufweist, welche die pneumatische Fläche (54) bildet.

27. Hydraulisches Kupplungsbetätigungssystem, **dadurch gekennzeichnet, dass** es eine hydraulische Betätigungsvorrichtung (12) nach einem der Ansprüche 1 bis 23 umfasst.
